Europäisches Patentamt

European Patent Office

Office européen des brevets

(19)

(11) **EP 1 329 863 A1**

(12) **EUROPEAN PATENT APPLICATION**

(43) Date of publication:
**23.07.2003 Bulletin 2003/30**

(51) Int Cl.⁷: **G08G 5/04**, G05D 1/10,
G01S 13/93

(21) Application number: **02001382.7**

(22) Date of filing: **19.01.2002**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **SAAB AB**
**581 88 Linköping (SE)**

(72) Inventor: **Hedfors, David**
**114 22 Stockholm (SE)**

(54) **Aircraft collision avoidance calculation method and system**

(57)   The present invention relates to a method of calculating a trajectory for an escape maneuver of an airborne vehicle from a determined starting point. The method comprises the steps of determining position, velocity and acceleration data for the starting point and from said data determining the escape maneuver. The method is characterized in that the escape maneuver trajectory is modeled as one or more analytic curves in three dimensions following after each other. The invention further relates to an air collision avoidance system and a ground collision avoidance system comprising said method for calculating escape maneuvers.

Fig 2

EP 1 329 863 A1

**Description**

FIELD OF THE INVENTION

The present invention relates to a method of calculating a trajectory for an escape maneuver of an airborne vehicle from a determined starting point.

The invention further relates to an air collision system and a ground collision system arranged to control whether each avoidance maneuver calculated using the above mentioned method in each moment during its calculated lapse is located at a stipulated minimum distance from calculated avoidance maneuver trajectories for other airborne vehicles and at a stipulated minimum distance from a ground profile, respectively.

PRIOR ART

Modern military aircraft are automated to increasingly higher degrees. Pilot workload is thereby reduced and aircraft performance and flight security is increased. One field of aircraft automation is computer aided collision avoidance systems capable of calculating automated flight sequences. Examples of such systems are ground collision avoidance systems and air collision avoidance systems.

An existing ground collision avoidance system is arranged to compare a predicted flight path, or trajectory, to a calculated ground profile. A warning is presented to the pilot when the margin between the predicted flight path and ground decreases below a certain limit. If the aircraft is not pulled up during a predetermined warning period time, the system is arranged to override pilot commands and engages an avoidance maneuver. As soon as the situation is considered safe, the control is handed back to the pilot. For adequate performance, the system must operate at a relatively high frequency, characteristically about 30 Hz. A conflicting requirement is that the workload imposed on the aircraft system computer must not be heavier than that the computer adequately can perform its other tasks, such as navigation, radar image processing and communication with other computers.

An existing air collision avoidance system for vehicles is described in WO 01/46933, wherein a possible avoidance maneuver trajectory for the respective vehicle is calculated and compared with the avoidance maneuver trajectories calculated for the other vehicles for controlling whether the avoidance maneuver trajectory of the vehicle in every moment during its calculated lapse is located at a stipulated minimum distance (d) from the avoidance maneuver trajectories of the other vehicles. A warning is presented to a person maneuvering the vehicle and/or the vehicle is made to follow an avoidance maneuver trajectory previously calculated and stored for the vehicle if the comparision shows that the avoidance maneuver trajectory of a vehicle in any moment during its calculated lapse is located at a distance from the avoidance maneuver trajectories of any of the other vehicles that is smaller than the stipulated minimum distance (d).

Thus, both system types require a model of how the aircraft will respond to commands, including a prediction of the flight path, in order to calculate when and how to engage the avoidance maneuver. Today, a numeric model is used for predicting the aircraft trajectories. The numeric model used involves characteristically many calculation steps and thus the trajectory calculations are imposing a heavy workload on the aircrafts' system computer.

PURPOSE OF THE INVENTION

One purpose of the invention is to provide a new model for calculating aircraft trajectories for use in collision avoidance systems, especially for use in fighter aeroplanes. The new model shall require a shortened execution time in the aircraft's system computer compared to known numerical methods. This is an important feature since the computational speed of an aircraft system computer is usually low and not at all comparable to modern desk top machines, due to the long qualification time needed when a new device is to be introduced in a military aircraft.

SUMMARY OF THE INVENTION

According to the invention, said purpose is achieved by means of a method for calculating a trajectory for an escape maneuver of an airborne vehicle according to claim 1. The airborne vehicle is for example a fighter aeroplane.

The method is based on an analytic model wherein the escape maneuver trajectory is modeled as one or more curves continuous in time and lying in the three-dimensional space. In the case of more than one curve, the curves follow after each other. Each curve is described as an analytic expression valid for a specified time period.

In one embodiment with a single curve, the curve is following the circumference of a circle sector. In another embodiment a free fall trajectory component is added to the circle sector circumference. The curve can also follow the circumference of an ellipse sector or another analytically described curve with or without the addition of a free fall trajectory.

In an alternative embodiment with two curves or more, each curve is described as a circle sector circumference with or without the addition of a free fall trajectory component. Preferably each curve is fitted to a foregoing curve, so that for example there is a continuity in the tangential acceleration.

A simple way to describe analytic curves is to describe them in parametric form. In an example where Cartesian coordinates are used each curve is described as the parameter equation $x=f(t)$, $y=g(t)$, $z=h(t)$ for a predetermined time interval. Thus each escape maneuver trajectory can be described as one or more such parameter equations each valid for a specific time interval.

The invention further includes an air collision avoidance system according to claim 6 and a ground avoidance system according to claim 7 for use in an airborne vehicle.

The systems are arranged to calculate a number of avoidance maneuver trajectories starting from a predicted future position and to determine whether each calculated trajectory in each moment during its calculated lapse is located at a stipulated distance from an obstacle(s). In the case of an air collision system the obstacles are calculated escape maneuver trajectories for other vehicles. In the case of a ground collision system the obstacle is the ground and ground profile data are stored in the airborne vehicle. When only one possible escape maneuver remains, an escape maneuver is performed.

During an aerial battle the true flight path is continuously changed and the predicted future position must be updated several times per second. For each update of the future position a new set of escape maneuver trajectories is computed and compared to the obstacles, as discussed above. With the escape maneuver trajectories described as analytic functions, the calculation capacity required for calculating each trajectory is minimized while maintaining the model accuracy.

In the air collision avoidance system the analytic expression for the own vehicles escape maneuvers and the analytic expressions for the other vehicles escape maneuvers simplifies computation of an interference point or a point in time where the curves are closer than the safe distance d.

BRIEF DESCRIPTION OF THE DRAWING

With reference to the enclosed drawing, the invention will hereinbelow be more closely described by means of embodiment examples.

Fig 1     schematically shows two aeroplanes equipped with a air/ground collision system according to the invention and avoidance maneuver trajectories calculated for the respective aeroplane.

Fig 2     shows a flow chart illustrating the function of the air/ground collision avoidance system in accordance with one embodiment of the present invention,

Fig 3     shows an example of the principles of a model implemented in each aeroplane for predicting the path to a point from which the avoidance maneuver trajectories are calculated,

Fig 4     shows the predicted path as in fig 3 and the trajectory for an escape maneuver according to a first embodiment of the invention and

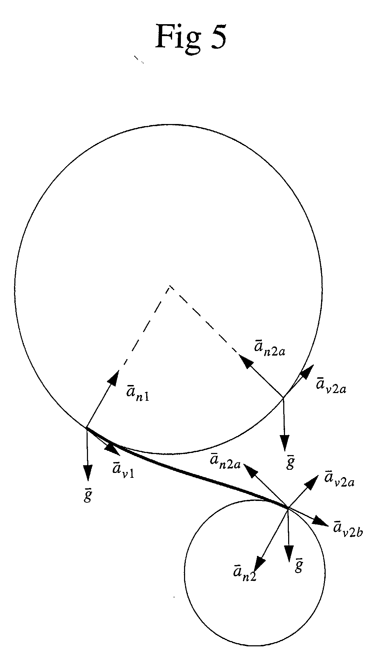

Fig 5     shows an escape maneuver trajectory according to a second embodiment of the invention

DETAILED DESCRIPTION OF PREFERRED EMBODIMENTS

**An air collision avoidance system**

*General*

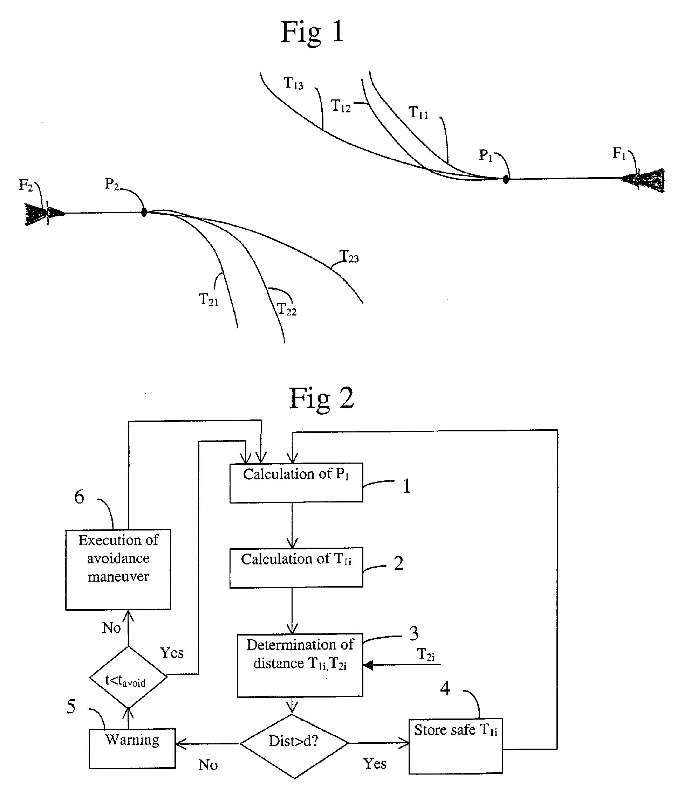

Fig 1 schematically shows two aeroplanes $F_1$ and $F_2$ flying in a direction towards each other. The aeroplanes are each equipped with an air collision avoidance system, the function of which is illustrated in fig 2. The air collision avoidance system will be described in relation to the aeroplane $F_1$ but it will be understood that the other aeroplane $F_2$ is equipped with a similar or identical air collision avoidance system. The aeroplane $F_1$ is arranged to continuously calculate 1 its future position $P_1$. This is preferably performed in therefore designated software or hardware means. The aeroplane $F_1$ is further arranged to calculate 2 one or several avoidance maneuver trajectories $T_{1i}$ starting from the calculated future position $P_1$. The air collision avoidance system is equipped with software and/or hardware means designated for performing these avoidance maneuver trajectory calculations.

The calculated future position $P_1$ is based on an assumption on how far and in what direction the plane travels during a predetermined period of time from the current point in time to a point in time hereinafter denoted $t_{avoid}$. The predetermined time period is characteristically 0.4 to 1.0 seconds.

In the calculation of the avoidance maneuver trajectories $T_{1i}$ from the point $P_1$ at the time $t_{avoid}$, a model is used which can be made more or less complex depending on the accuracy desired in the system and the computer power that can be used. The model is based on the concept that one or more curves following after each other builds up the trajectory. The avoidance maneuver calculating function 2 utilizes this model for the calculation of a number of possible avoidance maneuver trajectories $T_{1i}$ with differing directions from the calculated future positions $P_1$.

The path of the aeroplane $F_1$ to its calculated future position $P_1$ can be calculated as a curve in accordance with the same model and thus the path curve and each avoidance maneuver trajectory curve can be expressed as a parametric equation, in which the x-, y- and z-coordinates are functions of time. In this model, the aircraft is approximated as a point along the path to $P_1$ and the curves along the trajectory $T_1$. Its position along the curves will be denoted

$$\overline{r} = \overline{r}(t) = \begin{bmatrix} x_n(t) \\ y_n(t) \\ z_n(t) \end{bmatrix},$$

wherein $x_1(t)$, $y_1(t)$, $z_1(t)$ valid for $t_0 < t < t_{avoid}$ describes the curve to the point $P_1$, $x_2(t)$, $y_2(t)$, $z_2(t)$ valid for $t_{avoid} < t < t_2$ describes a fist curve of the trajectory $T_1$, $x_3(t)$, $y_3(t)$, $z_3(t)$ valid for $t_2 < t < t_3$ describes a second curve of the trajectory $T_1$, etc.

The aeroplane $F_1$ is also arranged to determine 3 whether the calculated avoidance maneuver trajectories $T_{1i}$ of the aeroplane $F_1$ in each moment during its calculated lapse is located at a stipulated minimum distance d from the avoidance maneuver trajectories $T_{2i}$ for the other aeroplane. If it is determined that there exists such safe avoidance maneuver trajectories, the data concerning the safe calculated avoidance maneuver trajectories $T_{1i}$ are stored 4 in a therefore suited storage unit. Thereafter a new future point in time $t_{avoid}$ and corresponding position $P_1$ is calculated based upon the present position of the aeroplane and the previously described procedure 1-3 is repeated. If, on the other hand it is determined that there are no avoidance maneuver trajectories $T_{1i}$ of the aeroplane that all the time during its calculated lapse is located at a distance from the avoidance maneuver trajectories $T_{2i}$ of the other aeroplane equal to or bigger than the stipulated minimum distance d, a warning 5 of the existing risk of collision is activated and thus the pilot is warned. The stipulated minimum distance d corresponds to a predetermined safety distance $d_{safe}$, possibly supplemented with an error $d_{error}$ corresponding to an estimated maximum error of the calculated avoidance maneuver trajectory $T_1$, $T_2$. The avoidance maneuver trajectories $T_{2i}$ of the other aeroplane $F_2$ are for example provided by direct communication between the aeroplanes $F_1$, $F_2$.

The warning function 5 can be arranged to present the warning in the form of an acoustic signal and/or a light signal. Preferably, the warning function 5 is also arranged to present an appropriate avoidance maneuver to the pilot, which avoidance maneuver is based on the last stored safe avoidance maneuver trajectory. The initial warning is presented a short time before the moment $t_{avoid}$ when an avoidance maneuver based on the last stored safe avoidance maneuver trajectory has to be initiated in order to be able to avoid a collision with certainty. After the initial warning has been actuated, the system continues to search after a safe avoidance maneuver trajectory $T_1$ in which connection a new future position $P_1$ for the aeroplane is calculated 1 based on the present position of the aeroplane and the previous process is repeated. If it is determined 3 that one or more new safe avoidance maneuver trajectories have been found, for instance due to the fact that any of the aeroplanes since the previous cycle of calculation has performed such maneuver that an immediate risk of collision is no longer existing, the warning function is inactivated. In this case, the new safe avoidance maneuver trajectory/-ies is/are stored in the storage unit and a new cycle of calculation follows.

If no new safe avoidance maneuver trajectory is found during the warning period, i.e. before the moment $t_{avoid}$ when the aeroplane has reached the position $P_1$ where the safe avoidance maneuver has to be initiated, the system executes 6 an automatic avoidance maneuver based on the last stored safe avoidance maneuver trajectory $T_1$. Said executing function is arranged to calculate control parameters based on the stored safe avoidance trajectory $T_1$ by means of which control parameters the aeroplane can be made to perform an avoidance maneuver corresponding to the stored avoidance maneuver trajectory $T_1$ starting at the moment $t_{avoid}$.

When the automatic avoidance maneuver has been performed, the control of the maneuvering system of the aeroplane is returned to the pilot as soon as possible after the situation is safe again.

*Calculating the predicted point $P_1$*

Since data is not known in advance regarding the flight conditions, the aeroplane is assumed to follow a relatively simple path ending in P1. This assumption that the path is simple can only impose a small error to the predicted path compared to the actual path since the time period between the current point in time and the point in time $t_{avoid}$ from which the avoidance maneuver trajectories are calculated is relatively short.

In accordance with the above, the function 1 in $F_1$ for calculating $P_1$ is fed with information about current position, velocity and acceleration. The predicted point $P_1$ is in the described example calculated under the assumption that the tangential acceleration is constant during the predetermined interval and the path to the point $P_1$ is assumed to be circular shaped with a constant radius determined by the current normal acceleration value inputted to the calculation function 1. The prediction time period for fighter aeroplanes is short, characteristically about 0.4 to 1.0 seconds, and thus the assumption that the radius during this time period is constant contributes very little to the total error in the calculated position $P_1$ at the end of the path.

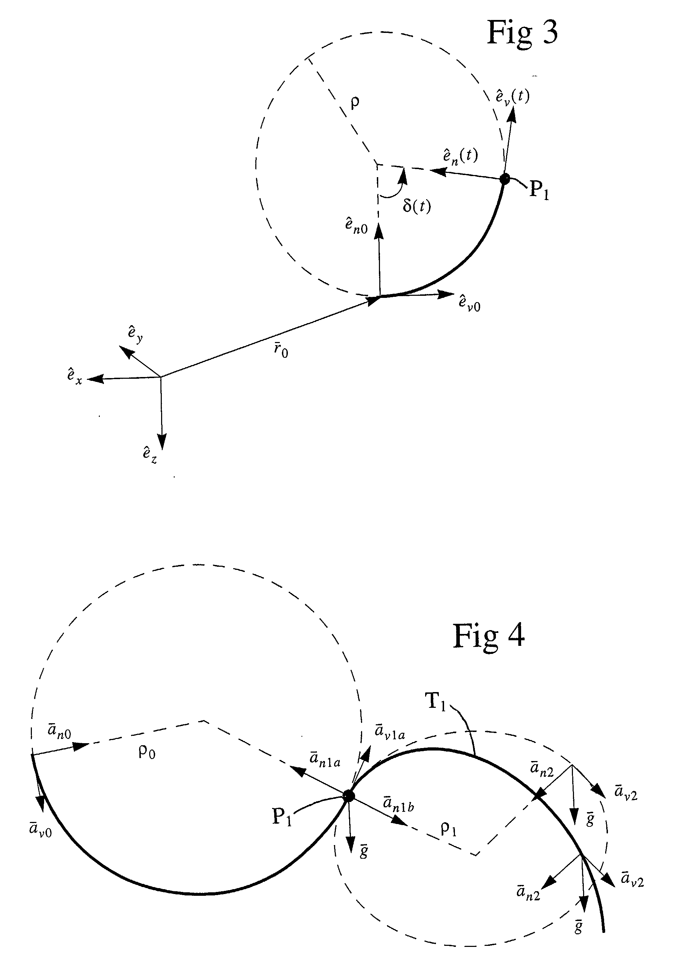

Fig 3 illustrates the path to the position $P_1$ modeled as a circle in space, where index zero indicate values at the current point in time, here the current time is set to $t_0 = 0$. The circle radius $\rho$ is calculated by the following equation

$$\rho = \frac{v_0^2}{a_{n0}}$$

using the initial speed, $v_0$ and normal acceleration $a_{n0}$. The angle $\delta(t)$, which controls the motion along the trajectory, is calculated by the following formula:

$$\delta(t) = \frac{v_0\, t + a_v \dfrac{t^2}{2}}{\rho}$$

using the initial speed $v_0$ and the tangential acceleration $a_v$ initially measured. The time dependent unit vectors $\hat{e}_v$ (t) and $\hat{e}_n$ (t) rotating with $\delta$(t) are described as:

$$\hat{e}_v(t) = \cos \delta \cdot \hat{e}_{v0} + \sin \delta \cdot \hat{e}_{n0}$$

$$\hat{e}_n (t) = -\sin \delta \cdot \hat{e}_{v0} + \cos \delta \cdot \hat{e}_{n0}$$

The position vector $\bar{r}(t)$, velocity vector $\bar{v}(t)$ and acceleration vector $\bar{a}(t)$ in the time interval can be described as:

$$\bar{r}(t) = \bar{r}_0 + \rho \cdot (\hat{e}_{n0} - \hat{e}_n)$$

$$\bar{v}(t) = (v_0 + a_v t) \cdot \hat{e}_v$$

$$\bar{a}(t) = a_v \hat{e}_v + \frac{(v_0 + a_v t)^2}{\rho} \hat{e}_n = a_v \hat{e}_v + a_n \hat{e}_n$$

and the point $P_1$ can be described as $\bar{r}$ ($t_{avoid}$), wherein $t_{avoid} = t_{interval\ length} + t_0$. The above described data inputted to the $P_1$ calculating function 1 for calculating the position vector, velocity vector and acceleration vector are measured and/or calculated. For example, position and velocity data can be fed from a conventional inertial navigation system of the aeroplane to the $P_1$ calculating function 1.

The calculating function 1 is arranged to output data for the calculated predicted point $P_1$, i.e. $\bar{r}$ ($t_{avoid}$), the calculated velocity $\bar{v}$ ($t_{avoid}$), and the calculated acceleration $\bar{a}$ ($t_{avoid}$).

*Calculating potential avoidance maneuvers*

The avoidance maneuver calculating function 2 is arranged to combine simple geometrical curves in order to constitute an analytic solution.

When the avoidance maneuver is initiated at $t_{avoid}$, the normal acceleration will change direction and magnitude, and thus the trajectory is continued along a new curve. Each avoidance maneuver trajectory $T_{1i}$ is constituted by a single curve or by a sequence of curves, each with its own normal acceleration magnitude and direction. The number of curves used is a trade off between algorithm simplicity and computational workload on one hand and model accuracy on the other.

The first curve of the avoidance maneuver trajectory must be fitted to the initial flying conditions, i.e. the curve of the movement to and at the point $P_1$. As stated above, the vectors $\bar{r}$ ($t_{avoid}$), $\bar{v}$ ($t_{avoid}$) and $\bar{a}$ ($t_{avoid}$) for the starting point $P_1$ at the starting time $t_{avoid}$ are outputted to the function 2 and the function 2 fits the first avoidance maneuver trajectory curve to said vectors. In an extended version the curve of the avoidance maneuver trajectory can also be fitted to derivatives of the acceleration in order to improve model accuracy.

Fig 4 shows a trajectory $T_1$ calculated according to a model in accordance with a first embodiment of the avoidance maneuver trajectory calculating function 2. Each trajectory $T_{1i}$ starting in $P_1$ is modeled as a single curve following after an initial circle segment with a radius $\rho_0$ computed by the calculation function 1. In fig 4 the path along the left circle represents the calculated path to the point $P_1$ and the trajectory $T_1$ to the right of $P_1$ represents a potential avoidance maneuver modeled as a single curve as will be discussed below. The velocity along the trajectory $T_1$ is affected by the pull of gravity. With an escape roll angle close to 0° the flight path will bend up and the aircraft slow down. For roll angles close to 180°, the aircraft will accelerate. This effect is best modeled as a free fall trajectory added to the circular trajectory. This is seen in fig 4 in that the trajectory deviates from the dashed line. This way of modelling will result in an almost correct velocity. The model also predicts a nose drop for an escape roll angle of 90°, which is consistent with simulated avoidance maneuvers.

The elliptical shape of the dashed curve illustrates that the trajectory is following a circle in a plane different from the plane of the first circle placed in the plane of the drawing sheet.

To sum up, the avoidance maneuver trajectory of fig 4 is a sum of two paths: a new circular path and a free fall trajectory. For the calculation of the new circular path the new centripetal acceleration must be found. The free fall trajectory is simple, an acceleration downwards with magnitude g.

The roll angle and load factor for the avoidance maneuver is used to calculate the new circular path. The roll angle of the avoidance maneuver, which specifies the direction of the new centripetal acceleration, is measured from the most vertical vector in the normal plane to the velocity. The magnitude of the new centripetal acceleration is calculated using variables and data obtainable from the flight control system. These specific calculations will not be described here; the calculation consists of normal steps known to the person skilled in the art. After the new centripetal acceleration has been determined, the calculation of the circular path is similar to the first part of the flight path.

In the position $P_1$ the centripetal acceleration changes abruptly as the flight path changes from one curve to another. However, this can not be allowed for the tangential acceleration, as the aircraft velocity must change smoothly. When the acceleration of gravity is introduced explicitly, the tangential acceleration must therefore be adjusted as follows. The new, adjusted tangential acceleration plus the projection of the acceleration of gravity on the velocity vector must equal the tangential acceleration at the end of the path to $P_1$.

In a second embodiment of the model, shown in fig 6, the avoidance maneuver trajectory is composed of two curved parts following the initial circular element. At the time when the load factor is to achieve its new value, the trajectory will change to a corresponding curve, altering the load factor only. The same holds for the change of roll angle and the order between the two is arbitrary. When changing from one curve, composed of a circle and a free fall trajectory, to another similar curve, special attention must be brought to the tangential acceleration. When the trajectory is a sum of a circle and a free fall trajectory, the centripetal acceleration of the circle will no longer be normal to the velocity. Neither will the tangential acceleration be parallel to the velocity. As is seen in fig 6, it is necessary to consider this when calculating the new tangential acceleration. The projection of the sum of the previous centripetal and tangential acceleration, $\bar{a}_{n2a}$ and $\bar{a}_{v2a}$ on the velocity must equal the new tangential acceleration $\bar{a}_{v2b}$. However, there is no need to consider the acceleration of gravity in this case, as neither gravity nor velocity has changed with the new circle. The equation for the new tangential acceleration is as follows.

$$\bar{a}_{v2b} = \frac{(\bar{a}_{n2a} + \bar{a}_{v2a}) \bullet \bar{v}_2}{|\bar{v}_2|^2} \cdot \bar{v}_2$$

The avoidance maneuver calculating function is preferably arranged to calculate several potential escape maneuvers from the predicted point $P_1$. In one example six possible escape maneuvers are calculated with the escape roll angels in the interval 60° to 180°.

**A ground collision avoidance system**

A ground collision avoidance system of the aeroplane $F_1$ is arranged to perform mainly in the same manner as the air collision avoidance system explained with reference to fig 2. Thus, the ground collision avoidance system is arranged to calculate a predicted flight path for a predetermined time interval to a position $P_1$. The function 1 for calculating the flight path can either be arranged to find the flight path by numerical calculations or by finding an analytic expression. The function for calculating the flight path is arranged to deliver coordinates for where the aeroplane is expected to be at the end of the time interval together with velocity and acceleration data to an avoidance maneuver calculating function 2. The function 2 is arranged to calculate a number of avoidance maneuver trajectories starting from said future position $P_1$ in the manner as described in relation to the air collision avoidance system. The obtained avoidance maneuver trajectories are fed to a function for determining whether the trajectories in each moment during their calculated lapse are located at a stipulated d distance from a ground profile. The ground profile of a terrain is for example provided from a database containing terrain data of the plane. If it is determined that there exists one or more such safe escape maneuvers, the data concerning the calculated avoidance maneuver trajectories are stored in a storage unit 4. Thereafter a new future position $P_1$ is calculated by the designated function 1 based on the present position of the plane and the previously discussed procedure is repeated.

A warning 5 is presented to the pilot when there are no avoidance maneuver trajectories for which the distance d is kept for the whole escape maneuver. If the aircraft is not pulled up during the warning time, the system is arranged to override pilot commands and engages an avoidance maneuver. As soon as the situation is considered safe, the control is handled back to the pilot. The initial warning is presented a short time before the moment $t_{avoid}$ when an avoidance maneuver based on the last stored safe avoidance maneuver trajectory has to be initiated in order to be able to avoid a collision with certainty. After the initial warning has been actuated, the system continues to search after a safe avoidance maneuver trajectory $T_1$ in which connection a new future position $P_1$ for the aeroplane is calculated based on the present position of the aeroplane and the previous process is repeated. If it is determined that one or more new safe avoidance maneuver trajectory has been found, for instance due to the fact that the aeroplane since the previous cycle of calculation has performed such maneuver that an immediate risk of ground collision is no longer existing, the warning is inactivated. In this case, the new safe avoidance maneuver trajectory/-ies is/are stored in the storage unit and a new cycle of calculation follows. If no new safe avoidance maneuver trajectory is found during the warning period, i.e. before the moment $t_{avoid}$, the system executes an automatic avoidance maneuver based on the last stored safe avoidance maneuver trajectory $T_1$.

**Claims**

1. Method of calculating a trajectory (T) for an escape maneuver of an airborne vehicle, said method comprising the steps of determining state data of the vehicle at a predetermined starting position for the escape maneuver trajectory and from said state data determining said trajectory, wherein the state data includes position, velocity and acceleration data, **characterized in that** the escape maneuver trajectory is modeled as one or more continuous curves in three dimensions following after each other and **in that** each curve is described as an analytic expression.

2. Method according to claim 1, **characterized in that** each curve is fitted to the foregoing curve.

3. Method according to claim 2, **characterized in that** the curves are fitted to each other so that there is a continuity in the tangential acceleration.

**4.** Method according to claim 1, **characterized in that** each curve is modeled to comprise a circle section component.

**5.** Method according to claim 4, **characterized in that** at least one of the curves further is modeled to comprise a free fall trajectory component.

**6.** Method according to any of the preceding claims, **characterized in that** each analytic expression is in the form of a parameter equation.

**7.** Air collision avoidance system for an airborne vehicle, said system comprising

- means (1) for continuously calculating a future position,
- means (2) for determining at least one avoidance maneuver trajectory from said future position,
- means (3) for controlling whether the avoidance maneuver trajectory in each moment during its calculated lapse is located at a stipulated minimum distance from avoidance maneuver trajectories for other airborne vehicles,

**characterized in that** said avoidance maneuver trajectory determining means (2) are arranged to model each trajectory as one or more continuous curves in three dimensions following after each other, wherein each curve is described as an analytic expression.

**8.** Ground collision avoidance system for an airborne vehicle, said system comprising

- means (1) for continuously calculating a future position,
- means (2) for determining at least one avoidance maneuver trajectory from said future position,
- means (3) for controlling whether the avoidance maneuver trajectory in each moment during its calculated lapse is located at a stipulated minimum distance from a ground profile,

**characterized in that** said avoidance maneuver trajectory determining means (2) are arranged to model each trajectory as one or more continuous curves in three dimensions following after each other, wherein each curve is described as an analytic expression.

**9.** System according to claim 7 or 8, **characterized in that** said avoidance maneuver trajectory determining means (2) are arranged to include a circle section component in each curve.

**10.** System according to claim 9, **characterized in that** said avoidance maneuver trajectory determining means (2) are arranged to include a free fall trajectory component in at least one of the curves.

**11.** System according to any of the claims 7-10, **characterized in that** said avoidance maneuver trajectory determining means (2) are arranged to design the curves so that there is a continuity in the tangential acceleration in the transitions between the curves.

# Fig 1

# Fig 2

Fig 3

Fig 4

# Fig 5

**European Patent Office**

## EUROPEAN SEARCH REPORT

Application Number

EP 02 00 1382

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 201 482 B1 (VIEBAHN HARRO VON ET AL) 13 March 2001 (2001-03-13) <br> * column 2, line 16-21 * <br> * column 3, line 10-42 * <br> * column 6, line 52-59 * <br> * column 7, line 39-45 * <br> * figures 9-11 * | 1,2,4, 7-9 | G08G5/04 <br> G05D1/10 <br> G01S13/93 |
| X | US 3 396 391 A (VEHRS CHARLES L ET AL) 6 August 1968 (1968-08-06) <br> * column 9, line 60-64 * <br> * column 10, line 46-56 * <br> * column 15, line 19-35 * <br> * figures 8A-8B * | 1-5,8-11 | |
| D,A | WO 01 46933 A (SAAB AB ;UHLIN PETER (SE); SPORRONG JONAS (SE)) 28 June 2001 (2001-06-28) <br> * page 10, line 11 - page 11, line 2 * <br> * figure 1 * <br> * claims 1,7 * | 1-11 | |
| A | KOSECKA J ET AL: "2 1/2 D conflict resolution maneuvers for ATMS" PROCEEDINGS OF THE 37TH IEEE CONFERENCE ON DECISION AND CONTROL (CAT. NO.98CH36171), PROCEEDINGS OF THE 37TH IEEE CONFERENCE ON DECISION AND CONTROL, TAMPA, FL, USA, 16-18 DEC. 1998, <br> pages 2650-2655 vol.3, XP002205943 1998, Piscataway, NJ, USA, IEEE, USA ISBN: 0-7803-4394-8 <br> * the whole document * | 1-11 | TECHNICAL FIELDS SEARCHED (Int.Cl.7) <br><br> G08G <br> G05D <br> G01S |

-/--

The present search report has been drawn up for all claims

| Place of search | Date of completion of the search | Examiner |
|---|---|---|
| THE HAGUE | 15 July 2002 | Flores Jiménez, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 02 00 1382

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | KUCHAR J K ET AL: "A review of conflict detection and resolution modeling methods" IEEE TRANSACTIONS ON INTELLIGENT TRANSPORTATION SYSTEMS, DEC. 2000, IEEE, USA, vol. 1, no. 4, pages 179-189, XP002205995 ISSN: 1524-9050 * the whole document * | 1-11 | |

TECHNICAL FIELDS SEARCHED (Int.Cl.7)

The present search report has been drawn up for all claims

| Place of search | Date of completion of the search | Examiner |
|---|---|---|
| THE HAGUE | 15 July 2002 | Flores Jiménez, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 02 00 1382

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2002

| Patent document cited in search report | | Publication date | Patent family member(s) | | Publication date |
|---|---|---|---|---|---|
| US 6201482 | B1 | 13-03-2001 | DE | 19609613 A1 | 18-09-1997 |
| | | | CA | 2247042 A1 | 18-09-1997 |
| | | | WO | 9734276 A1 | 18-09-1997 |
| | | | DE | 59700894 D1 | 27-01-2000 |
| | | | EP | 0886847 A1 | 30-12-1998 |
| US 3396391 | A | 06-08-1968 | NL | 6506906 A | 27-05-1968 |
| | | | DE | 1456162 A1 | 26-06-1969 |
| | | | GB | 1118961 A | 03-07-1968 |
| WO 0146933 | A | 28-06-2001 | SE | 515655 C2 | 17-09-2001 |
| | | | AU | 2243301 A | 03-07-2001 |
| | | | WO | 0146933 A1 | 28-06-2001 |
| | | | SE | 9904717 A | 23-06-2001 |

EPO FORM P0459

For more details about this annex : see Official Journal of the European Patent Office, No. 12/82